# EUROPÄISCHE PATENTSCHRIFT

(11) **EP 0 877 871 B1**
(45) Veröffentlichungstag und Bekanntmachung des Hinweises auf die Patenterteilung: **11.12.2002**
(21) Anmeldenummer: 97904371.8
(22) Anmeldetag: 03.02.1997
(51) Int. Cl.: F16D 65/16, B23P 15/10

(54) **KALTVERFORMTER KOLBEN FÜR EINE HYDRAULISCHE BREMSE**
COLD-FORMED PISTON FOR A HYDRAULIC BRAKE
PISTON FORME A FROID POUR FREIN HYDRAULIQUE

(30) Priorität: 01.02.1996 DE 19603586
(43) Veröffentlichungstag der Anmeldung: 18.11.1998
(73) Patentinhaber: Continental Teves AG & Co. oHG, 60488 Frankfurt (DE); FIRMA SANDER KG GmbH & Co., D-77871 Renchen-Ulm (DE)
(72) Erfinder: WEILER, Rolf, D-65817 Eppstein (DE); BACH, Uwe, D-65527 Niedernhausen (DE); PREUSS, Heinz-Jürgen, D-38518 Gifhorn (DE); SCHIEL, Wolfgang, D-65936 Frankfurt (DE); ZEIBIG, Uwe, D-77855 Achern (DE)
(74) Vertreter: Portwich, Peter
(86) Internationale Anmeldenummer: EP9700467
(87) Internationale Veröffentlichungsnummer: WO97028386

(56) Entgegenhaltungen:
- DE-A- 4 003 731
- DE-A- 4 340 453
- FR-A- 869 771
- US-A- 4 193 179
- US-A- 5 105 917
- PATENT ABSTRACTS OF JAPAN vol. 014, no. 347 (M-1002), 26.Juli 1990 & JP 02 120536 A (SUMITOMO SHOJI ET AL.), 8.Mai 1990,
- PATENT ABSTRACTS OF JAPAN vol. 005, no. 166 (M-093), 23.Oktober 1981 & JP 56 090130 A (AKEBONO BRAKE), 22.Juli 1981,
- PATENT ABSTRACTS OF JAPAN vol. 012, no. 260 (M-720), 21.Juli 1988 & JP 63 043736 A (KATAGIRI SEISAKUSHO), 24.Februar 1988,
- PATENT ABSTRACTS OF JAPAN vol. 6, no. 80 (M-129), 19.Mai 1982 & JP 57 019116 A (OGAWA NOBORU), 1.Februar 1982,

## Beschreibung

Die vorliegende Erfindung betrifft einen Kolben für eine hydraulische Bremse gemäß dem Oberbegriff des Anspruchs 1.

Die gattungsgemäße US-A-5 105 917 offenbart einen topfförmigen Kolben einer Scheibenbremse, der aus Stahlblech mittels einer Stanzbearbeitung hergestellt wird. Der genannte Kolben umfasst einen gewölbten Kolbenboden und eine sich daran anschließende zylindrische Kolbenwand, die an ihrem Rand einen abgewinkelten Abschnitt mit einer Anlagefläche an einem in der Scheibenbremse benachbarten Bremsbelag aufweist. Dabei ist die Anlagefläche gegenüber der Querschnittsfläche der Kolbenwand größer ausgebildet, um den am Bremsbelag auftretenden Flächendruck gering zu halten. Weiterhin ist in unmittelbarer Nähe des abgewinkelten Randes an der Außenseite eine umlaufende Nut in die Kolbenwand eingeformt. Durch das Einformen der Nut wird der dortige Querschnitt der Kolbenwand während der entsprechenden plastischen Umformbearbeitung mechanisch beansprucht. Dies beeinträchtigt zunächst allgemein die lokale Festigkeit der Kolbenwand im Bereich der Nut. Zudem wird dieser Nutbereich der Kolbenwand infolge des abgewinkelten Randes während des Bremsbetriebes neben einer Druckbelastung auch einer Biegebelastung ausgesetzt, die durch einen bezogen auf die Kolbenachse radial versetzten Kraftangriffsbereich an der Anlagefläche hervorgerufen wird. Dies erfordert für die Auslegung des Kolbens eine unerwünscht dicke Wandstärke, um den auftretenden Belastungen zerstörungsfrei standhalten zu können.

Ein weiterer Kolben ist beispielsweise aus der DE 40 03 731 A1 bekannt. Es handelt sich dabei um einen kaltverformten Kolben, der vorzugsweise im Tiefziehverfahren hergestellt ist, und welcher im Vergleich zu gegossenen Kolben verhältnismäßig dünnwandig gestaltet ist. Um die Wände des Kolbens bei einer Kraftbeaufschlagung vor Verformung zu schützen, besitzt der bekannte Kolben einen gewölbten Boden und eine an seinem Umfang einrollierte Nut, welche die Form des Kolbens versteifen. Durch die dünnwandige Ausführung derartiger Stahlkolben gegenüber solchen im Graugußverfahren hergestellten ergibt sich, daß auch die Anlagefläche des Topfrandes am Bremsbelag erheblich verkleinert ist gegenüber gegossenen Kolben. Die Folge ist ein hoher Flächendruck, welcher nicht wünschenswert ist.

Die Aufgabe der vorliegenden Erfindung besteht darin, die Anlagefläche eines Kolbens der eingangs genannten Art auf preiswerte Weise der eines gegossenen Kolbens anzugleichen ohne die Belastbarkeit des Kolbens zu beeinträchtigen.

Diese Aufgabe wird für einen gattungsgemäßen topfförmigen Kolben mit einer an einem nach innen gebogenen Rand ausgebildeten Anlagefläche für einen Bremsbelag sowie einer in die Kolbenwand eingerollten Nut, durch die im Kolbeninneren eine Schulter hervortritt dadurch gelöst, dass die axiale Projektion einer zwischen Nut und Schulter sich erstreckenden Querschnittsfläche der Kolbenwand in die Anlagefläche fällt. Das Prinzip der Erfindung liegt darin, die Anlagefläche des Topfrandes nicht als separates Teil anzuschweißen, sondern den Topfrand selbst zu verformen und somit einstückig mit dem Kolben die Anlagefläche an den Kolben anzuformen.

Die einfachste Verfahrensweise besteht im Einrollieren des Topfrandes und der anschließenden Überarbeitung der die Anlagefläche bildenden Stirnseite des Kolbens.

Ein weiterer Vorteil dieser Verfahrensweise liegt darin, daß der nach innen gebogene Topfrand zugleich für eine Belaghaltefeder eine Abstützung bilden kann, die näher am Bremsbelag angeordnet ist als bei einem Gußkolben, so daß der Hebelarm gegenüber herkömmlichen, gegossenen Kolben verkürzt ist und ein Belagkippen verhindert wird.

Die durch eine in den Außenumfang eingerollte Nut im Innenraum des Kolbens hervortretende Schulter kann zugleich dazu dienen, weitere, der Geräuschminderung dienende Arme der Belaghaltefeder formschlüssig einrasten zu lassen. Bei gegossenen Kolben muß die Schulter erst spanabhebend in den Innenraum des Kolbens eingefräst werden.

Eine nähere Erläuterung des Erfindungsgedankens erfolgt nun anhand der Beschreibung eines bevorzugten Ausführungsbeispiels in drei Figuren.

Es zeigt
- Fig. 1: einen erfindungsgemäßen Kolben im Längsschnitt,
- Fig. 2: einen vergrößerten Ausschnitt aus Fig. 1
- Fig. 3: eine Überlagerung eines Vertikalschnittes durch einen erfindungsgemäßen Kolben mit einem entsprechenden Ausschnitt aus einem gegossenen Kolben zur Veranschaulichung der unterschiedlichen Hebelarme für eine Belaghaltefeder.
- Fig. 4: eine Überlagerung eines Horizontalschnittes durch einen erfindungsgemäßen Kolben mit einem entsprechenden Ausschnitt aus einem gegossenen Kolben zur Veranschaulichung der unterschiedlichen Verankerungsschultern für eine Belaghaltefeder.

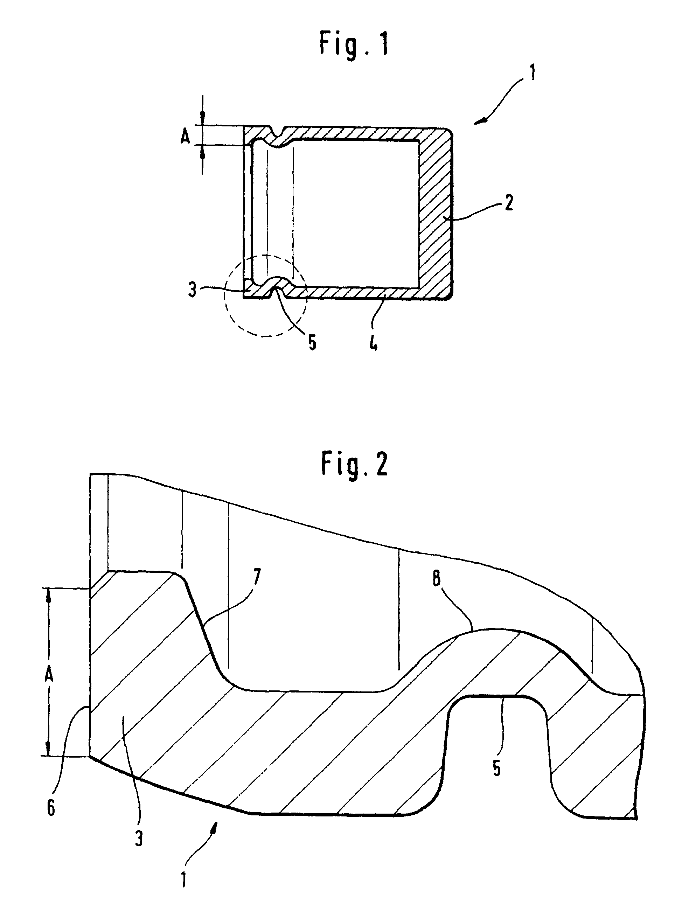

Fig. 1 zeigt einen Längsschnitt durch einen erfindungsgemäßen, tiefgezogenen Kolben 1, welcher im wesentlichen als zylindrischer Topf gestaltet ist, dessen Topfboden 2 auf der rechten Bildseite angeordnet ist und dessen Topfrand 3 nach links weist. Der Kolben 1 weist einen verdickten Boden 2 auf, der auf diese Weise gegen Verformungen geschützt ist.

Die Form des Topfbodens steht aber in keinem Zusammenhang mit der Erfindung, so daß der Boden 2 auch gemäß dem Stand der Technik gewölbt ausgebildet sein kann.

Die Wand 4 des Kolbens 1 weist in der Nähe des Randes 3 eine umlaufende radiale Nut 5 auf, welche in montiertem Zustand einen Dichtring oder dergleichen aufnimmt.

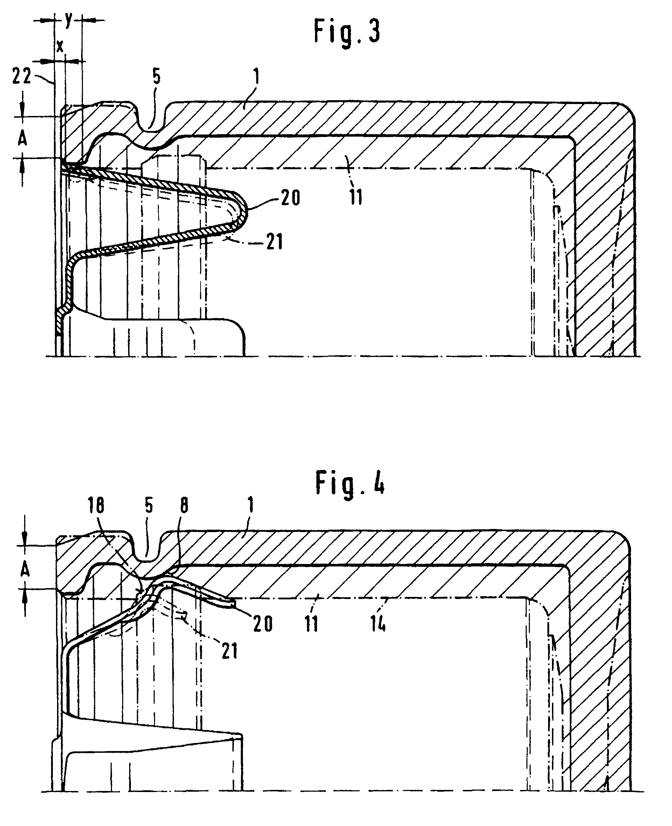

Der Rand 3 weist eine Anlagefläche A auf, die größer ist, als es der Wanddicke des Kolbens 1 entspricht. Diese Anlagefläche A entspricht in ihrem Querschnitt der Größe der Anlagefläche, welche üblicherweise ein im Graugußverfahren hergestellter Kolben aufweist. Der in Fig. 1 gestrichelt eingekreiste Bereich ist in Fig. 2 vergrößert wiedergegeben. Das zur Herstellung der Nut 5 verwendete Rollierverfahren ist für diese Anwendung an sich bekannt. Neu ist, daß auch der Rand 3 im Rollierverfahren radial nach innen gebogen ist und anschließend die Stirnfläche 6 des Randes 3 nachbearbeitet ist, so daß eine glatte Anlagefläche A entsteht. Der nach innen gebogene Rand 3 bildet im Innenraum des Kolbens 1 eine Schulter 7 und dient zur Abstützung einer Belaghaltefeder. Eine weitere Schulter 8 ist durch das Einrollieren der Nut 5 im Kolbeninneren hervorgetreten. Dies bietet Vorteile, die aus Fig. 3 und 4 deutlich werden.

In Fig. 3 und Fig. 4 sind in überlagerter Darstellung ein grob schraffierter Gußkolben 11 und ein fein schraffierter, im Tiefziehverfahren hergestellter Kolben 1 gemäß der Erfindung abgebildet. Die Nut 5 der beiden Kolben ist deckungsgleich genauso wie die Anlagefläche A. Es ist außer einem der Fig. 2 entsprechenden Ausschnitt aus den beiden Kolben auch noch eine Belaghaltefeder 20 dargestellt, die mit ihrer nicht dargestellten Fortführung an einem an der Anlagefläche A angeordneten Bremsbelag befestigt. Am Kolben 1 kann sich der Federarm der Belaghaltefeder 20 bereits an der Stelle x abstützen. Am gegossenen Kolben 11 liegt die Abstützung der strichpunktiert dargestellten Belaghaltefeder 21 weiter von der Anlagefläche A und somit vom Bremsbelag entfernt, dessen Rückenplatte bis zur Ebene 22 reicht.

Der Schnitt in Fig. 4 ist um den in Fig. 3 um 90° gedreht. Hier ist einer der zwei weiteren Arme der Belaghaltefeder 20 bzw. 21 zu sehen, welcher Vibrationen dämpfen und somit Gräusche mindern soll. Beim erfindungsgemäßen Kolben 1 greift der Arm der Belaghaltefeder 20 hinter die ohnehin vorhandene Schulter 8, die beim Einrollieren der Nut 5 entstanden ist. Am gegossenen Kolben 11 muß durch ein spanabhebendes Verfahren zunächst eine entsprechende Schulter 18 in die Wand 14 eingefräst werden.

Gegenüber einem Graugußkolben ergeben sich weitere Vorteile wie eine Gewichtsreduzierung um über 100 g pro Kolben sowie das Wegfallen von Lunker- und Porositätsproblemen, wie sie bei Graugußkolben auftreten.

## Patentansprüche

1. Kolben (1) für eine hydraulische Bremse, der aus Stahl in einem Kaltverformungsverfahren hergestellt und im wesentlichen als topfartiger Hohlzylinder gestaltet ist, mit einem von hydraulischem Bremsdruck beaufschlagbaren Boden (2) sowie einem bei Bremsdruckbeaufschlagung an einem Bremsbelag anlegbaren, um gebogenen Rand (3), der eine Anlagefläche (A) des Kolbens am Bremsbelag umfasst, die größer ist als die Querschnittsfläche der Kolbenwand (4) und mit einer in die Kolbenwand (4) eingerollten Nut (5), durch die im Kolbeninnern eine Schulter (8) hervortritt, **dadurch gekennzeichnet, dass** die axiale Projektion der zwischen Nut (5) und Schulter (8) sich erstreckenden Querschnittsfläche der Kolbenwand (4) vollständig in die Anlagefläche (A) fällt, und dass der Rand (3) nach innen gebogen ist.

2. Kolben nach Anspruch 1, **dadurch gekennzeichnet, dass** der Rand (3) des Kolbens (1) nach innen rolliert ist und mittels einer Nachbearbeitung an der dem Bremsbelag zugewandten stirnseitigen Anlagefläche (A) geglättet ist.

3. Kolben nach Anspruch 1 oder 2, **dadurch gekennzeichnet, dass** im montierten Zustand des Kolbens (1) innerhalb der radial umlaufenden Nut (5) in der Kolbenwand (4) ein Dichtring oder ein sonstiges Dichtungselement aufgenommen ist.

4. Kolben nach einem der vorhergehenden Ansprüche, **dadurch gekennzeichnet, daß** der nach innen gebogene Rand (3) eine Schulter (7) zur Verankerung der Enden einer belagseitig befestigten Belaghaltefeder (20) bildet.

## Claims

1. Piston (1) for a hydraulic brake made of steel in a cold-working process and generally configured as a bowl-shaped hollow cylinder, said piston having a bottom (2) to which hydraulic braking pressure can be applied as well as a deflected edge (3) which is movable into abutment on a brake lining when braking pressure is applied, said edge presenting an abutment surface (A) of the piston on the brake lining which is larger than the cross-sectional surface of the piston wall (4), and with a groove (5) roller-burnished into the piston wall (4) and thereby causing a shoulder (8) to project into the piston's interior,
**characterized in that** the axial projection of the cross-sectional surface of the piston wall (4) which extends between the groove (5) and the shoulder (8) falls completely into the abutment surface (A), and **in that** the edge (3) is deflected in an inward direction.

2. Piston as claimed in claim 1,
**characterized in that** the edge (30) of piston (1) is roller-burnished inwardly and smoothened in a finishing operation on the frontal abutment surface (A) facing the brake lining.

3. Piston as claimed in claim 1 or claim 2,
**characterized in that** a sealing ring or any other sealing element is accommodated inside the radially circumferential groove (5) in the piston wall (4) in the assembled condition of the piston (1).

4. Piston as claimed in any one of the preceding claims,
**characterized in that** the inwardly bent edge (3) provides a shoulder (7) for anchoring the ends of a lining holding spring (20) which is attached on the lining side.

## Revendications

1. Piston (1) pour frein hydraulique, fabriqué en acier selon un procédé de formage à froid et conformé sensiblement comme un cylindre creux du type creuset, comportant un fond (2) pouvant être sollicité par une pression hydraulique de freinage ainsi qu'un bord cintré (3) pouvant s'appliquer sur une garniture de frein lors de la sollicitation d'une pression de freinage, qui présente une surface d'appui (A) du piston sur la garniture de frein supérieure à la surface de la section transversale de la paroi (4) du piston ainsi qu'une rainure (5) cintrée dans la paroi (4) du piston, d'où résulte un épaulement (8) dans l'intérieur du piston, **caractérisé en ce que** la projection axiale de la surface en coupe transversale de la paroi (4) du piston s'étendant entre la rainure (5) et l'épaulement (8) tombe entièrement dans la surface d'appui (A), et **en ce que** le bord (3) est cintré vers l'intérieur.

2. Piston selon la revendication 1 **caractérisé en ce que** le bord (3) du piston (1) est roulé vers l'intérieur et rendu lisse au moyen d'un traitement ultérieur de la surface d'appui (A) frontale tournée vers la garniture de frein.

3. Piston selon la revendication 1 ou 2 **caractérisé en ce que**, à l'état monté du piston (1) une bague d'étanchéité ou un autre élément d'étanchéité est logée à l'intérieur de la rainure radiale circonférentielle (5) dans la paroi (4) du piston.

4. Piston selon l'une quelconque des revendications précédentes **caractérisé en ce que** le bord (3) cintré vers l'intérieur forme un épaulement (7) pour l'ancrage des extrémités d'un ressort (20) de maintien de garniture fixé du côté de la garniture.
